# EUROPEAN PATENT APPLICATION

(11) **EP 1 746 836 A2**
(43) Date of publication of application: **24.01.2007**
(21) Application number: 06013120.8
(22) Date of filing: 26.06.2006
(51) Int. Cl.: H04N 7/24

(54) **Encoded stream reproducing apparatus**

(30) Priority: 29.06.2005 JP 2005190095
(71) Applicant: KABUSHIKI KAISHA TOSHIBA, Tokyo 105-8001 (JP)
(72) Inventor: Kusunoki, Makoto Toshiba Corporation, Minato-ku Tokyo (JP)
(74) Representative: HOFFMANN EITLE

(57) **Abstract**

An encoded stream reproducing apparatus includes a separation unit for receiving a TS and separating a video PES and a sound PES from the TS, and a video decoding unit for decoding a separated video PES. The video decoding unit includes a PES separation unit for separating a PES header from the separated video PES and supplying an ES, ES error detection unit for detecting a syntax error of the ES and discarding an ES including the syntax error and supplying an ES without including the syntax error, and a decoder for decoding an ES supplied from the error detection unit and supplying a video signal.

## Description

### CROSS-REFERENCE TO RELATED APPLICATIONS

This application is based upon and claims the benefit of priority from Japanese Patent Application No. 2005-190095, filed on June 29, 2005, the entire contents of which are incorporated herein by reference.

### BACKGROUND

### 1. Field

One embodiment of the invention relates to an encoded stream reproducing apparatus for receiving an encoded stream sent by digital broadcasting and reproducing the encoded stream.

### 2. Description of the Related Art

In recent years, terrestrial digital broadcasting or digital satellite broadcasting of CS (communication satellite broadcasting) and BS (broadcasting satellite broadcasting) has started to become widespread. According to the digital broadcasting, large-screen and sharp video can be viewed at home.

In such digital broadcasting, an error may be included in a received broadcast signal when a receiving state is bad. When a video signal is decoded with the error included, its reproduced video generally becomes video whose viewing is unbearable and in addition, the video may not synchronize with sound. Therefore, it is desirable to detect the error included in the digital broadcast signal and, for example, discard a video signal including the error.

A method for detecting such an error is disclosed in JP-A-2001-025014. In the document, there is disclosed a system decoder that detects an error in a video bit stream and notifies a video decoder of this error information. In the video decoder, decoding processing of a frame without the error is performed using the error information.

Mobile broadcasting has been commercialized recently. The mobile broadcasting is a satellite digital broadcasting service of multi-channel and multimedia capable of being enjoyed even outdoors or during movement. Unlike conventional satellite broadcasting, in the mobile broadcasting, broadcast waves called an S band (band of 2. 6 GHz) near to that of a third-generation (3G) cellular telephone are used and are sent by a higher output than that of the conventional satellite broadcasting through a dedicated broadcast satellite.

In the conventional satellite broadcasting, it is necessary to fix an antenna in a veranda etc. but in the mobile broadcasting, broadcasting can be viewed while moving freely. A portable television, a vehicle-mounted television, a PC card type capable of being used in a notebook-sized PC, etc. have been released according to the mobile broadcasting.

As a data compression method of the mobile broadcasting as described above, for example, an H.264 (MPEG4 AVC) compression method is used. The H.264 compression method is a method for enabling a higher compression factor than ever before with quality of the original image maintained. The H. 264 is described as achieving compression efficiency twice or more that of, for example, MPEG-2 which are the conventional method, and has started to be adopted in mobile broadcasting or a cellular telephone, etc.

Even in such mobile broadcasting, an error may be included in a received signal because of influence of topography or constructions such as a building. Decoding processing of the H.264 method has a larger throughput than ever before, and particularly when the H.264 method is used in mobile environment, a system becomes smaller in size, so that error processing results in a large burden.

In the case of a configuration disclosed in the document JP-A-2001-025014 described above, in the system decoder, an error of a TS packet is detected and the video decoder is notified of the error, but a syntax error is detected by the video decoder and cannot be known previously. Therefore, detectable errors are limited and there are cases where error detection is insufficient. As described above, because of a stream including an error, an error incapable of recovery occurs in the decoder and video is distorted and also, a state in which the video does not synchronize with sound may be caused.

### BRIEF DESCRIPTION OF THE SEVERAL VIEWS OF THE DRAWINGS

A general architecture that implements the various feature of the invention will now be described with reference to the drawings. The drawings and the associated descriptions are provided to illustrate embodiments of the invention and not to limit the scope of the invention.

Fig. 1 is an exemplary schematic diagram showing an embodiment of a mobile broadcasting receiving apparatus;

Fig. 2 is an exemplary diagram showing a relation among an MPEG2-TS, a video PES and a sound PES;

Fig. 3 is an exemplary diagram showing a structure of a TS header;

Fig. 4 is an exemplary diagram showing a structure of a PES;

Fig. 5 is an exemplary block diagram showing a configuration of a video decoding unit 160;

Fig. 6 is an exemplary flowchart showing an action of a decoder 210;

Fig. 7A is an exemplary flowchart showing processing for detecting an error and discarding a stream including the error; and

Fig. 7B is an exemplary flowchart showing processing for detecting an error and discarding a stream including the error.

### DETAILED DESCRIPTION

An embodiment according to the invention will be described hereinafter with reference to the accompanying drawings.

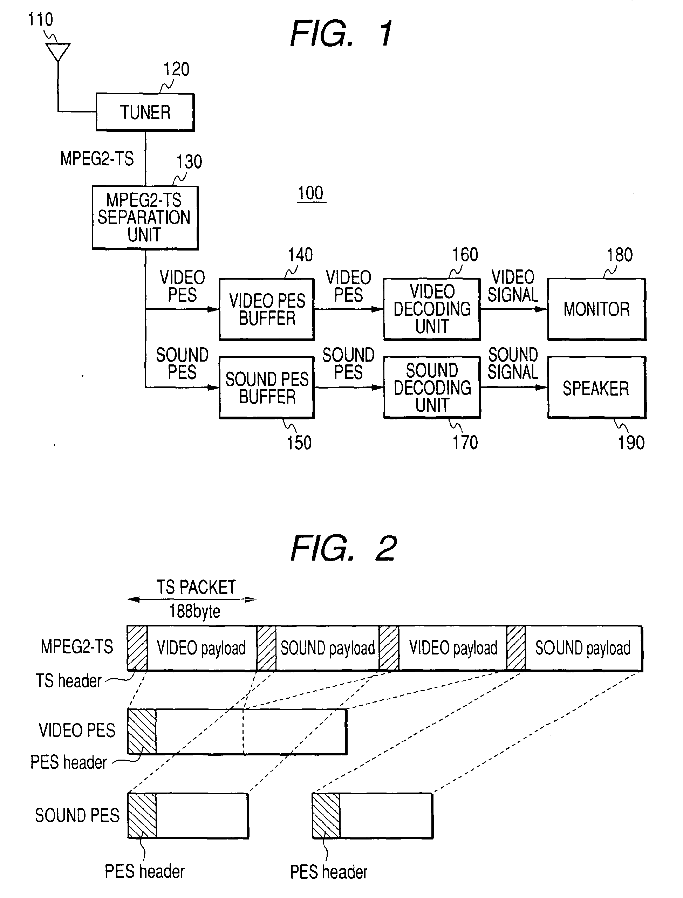

Fig. 1 is a schematic diagram showing a mobile broadcasting receiving apparatus 100 according to the embodiment.

Radio waves inputted from an antenna 110 are demodulated into an MPEG2-TS (TS: Transport Stream) in a tuner 120 and are inputted to an MPEG2-TS separation unit 130. In the MPEG2-TS separation unit 130, a video PES (Packetized Elementary Stream) and a sound PES are respectively separated from the MPEG2-TS stream and are inputted to a video PES buffer 140 and a sound PES buffer 150. The video PES stored in the video PES buffer 140 is inputted to a video decoding unit 160 in the case of reaching a specified time. An image decoded in the video decoding unit 160 is outputted and displayed to a monitor 180. The sound PES stored in the sound PES buffer 150 is inputted to a sound decoding unit 170 in the case of reaching a specified time. A sound signal decoded in the sound decoding unit 170 is outputted to a speaker 190.

The MPEG2-TS, PES and ES (Elementary Stream) will be described herein. Fig. 2 is a diagram showing a relation among the MPEG2-TS, the video PES and the sound PES. The MPEG2-TS is constructed of TS packets in which one packet has 188 bytes, and each of the TS packets is constructed of a PES header and a payload. The video PES or the sound PES is stored in the payload.

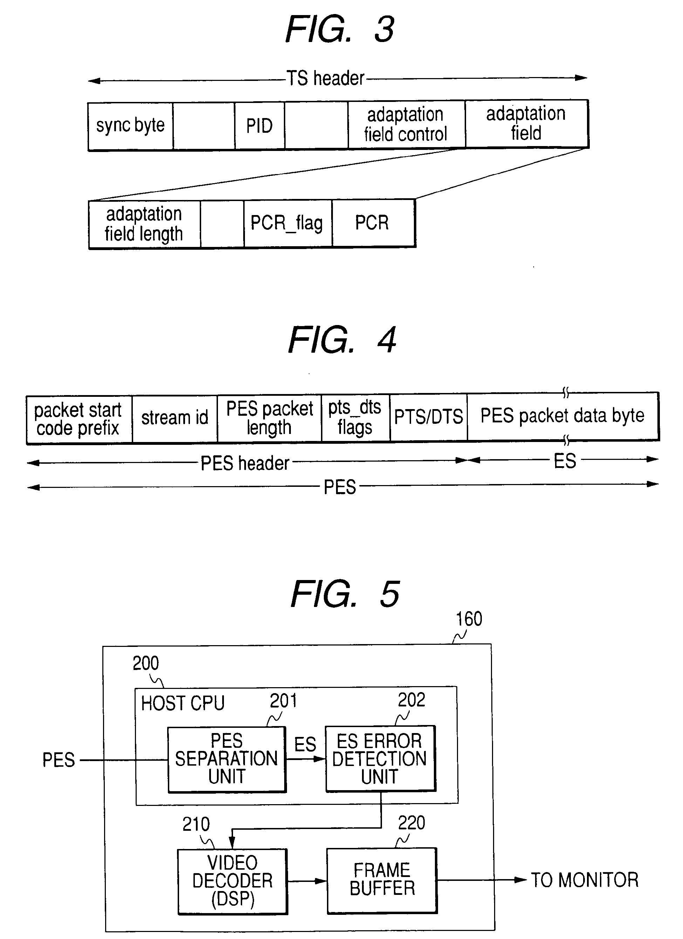

Fig. 3 is a diagram showing a structure of a TS header. A sync byte is a code (0x47) indicating the head of a TS packet. A PID is called a packet ID, and the video PES and the sound PES respectively have different PID values determined uniquely. The MPEG2-TS separation unit 130 can identify whether the video PES is stored or the sound PES is stored by examining the PID of a packet. An adaptation field control is a flag indicating whether or not an adaptation field and a payload are present in this packet. An adaptation field length is a value indicating a length of the adaptation field. A PCR_flag is a flag indicating whether or not PCR is present, and the PCR (program clock reference) is time information for calibrating time of a receiver.

Fig. 4 is a diagram showing a structure of a PES. Both of the video PES and the sound PES have the same structure of the PES. The PES is constructed of a header unit called a PES header and a PES packet data byte, that is, an ES (Elementary stream) body. The ES is the data itself in which video or sound is compressed and encoded. A packet start code prefix stored in the PES header is a code (0x000001) indicating the head of the PES. A stream id is a value indicating a kind of a stream, and a PES packet length is a value indicating a length of the PES. A DTS (decoding time stamp) is time information for decoding this PES, and a PTS (presentation time stamp) is time information for displaying this PES. Synchronization between video and sound can be obtained by outputting video and sound outputted from the video decoding unit 160 and the sound decoding unit 170 at the time indicated by the PTS.

Fig. 5 is a block diagram showing a configuration of the video decoding unit 160.

The video decoding unit 160 includes a host CPU 200, a video decoder (DSP) 210 and a frame buffer 220. The host CPU 200 includes a PES separation unit 201 and an ES error detection unit 202. The host CPU 200 and the decoder 210 are constructed as one LSI.

The PES separation unit 201 separates a header unit from a video PES and extracts an ES. The extracted ES is supplied to the ES error detection unit 202 and an error is detected. The ES error detection unit 202 can perform error detection of a syntax level, and the ES in which an error is detected is discarded herein and is not inputted to the video decoder 210.

The video decoder 210 decodes the ES supplied from the ES error detection unit 202. At this time, the video decoder 210 decodes only the ES with no error at a syntax level, so that a fatal error such as a hang-up does not occur. Data decoded is stored in the frame buffer 220 and a video frame is outputted to the monitor as a video signal according to the time of the PTS.

In conventional processing of the host CPU 200, an ES was only separated from a PES, so that an error included in the ES was inputted to the video decoder as it is. When the error included in the ES was an error with which the video decoder cannot cope, a fatal error in which, for example, the video decoder hung up was caused. Also, conventionally, an error is first detected by decoding an ES in the video decoder and the ES including the error is discarded. However, all the errors cannot be detected in the video decoder and there were cases where video data including the error was decoded. In such cases, video displayed on the monitor resulted in distorted video whose viewing was unbearable. According to the decoding unit 160 in accordance with the invention, an ES without including an error is inputted to the video decoder 210, so that a situation in which the video decoder 210 hangs up or distorted video is displayed does not occur.

Next, decoding processing by the video decoder 210 will be described.

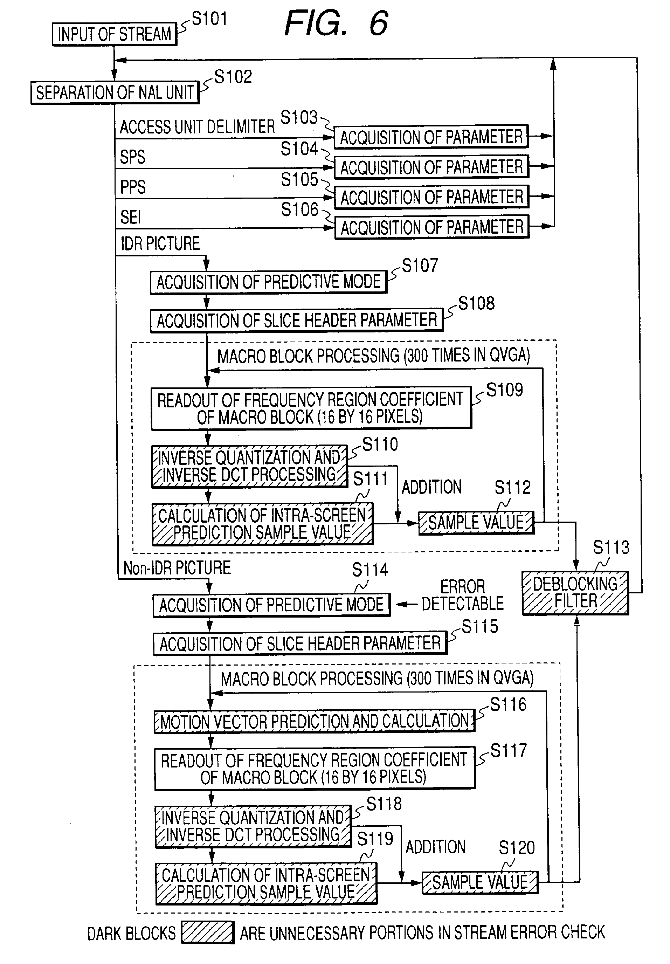

In the embodiment, H.264 is used in a video encoding method. Fig. 6 is a flowchart showing an action of the H.264 decoder 210. Using a storage format called a NAL (Network Abstraction Layer) unit, an H.264 encoded stream is classified every kind of data and is transmitted.

In operation of H.264 in mobile broadcasting, an access unit delimiter, an SPS (Sequence Parameter Set), a PPS (Picture Parameter Set), SEI (Supplemental Enhancement Information) and a slice layer (IDR picture/Non-IDR picture) are respectively transmitted as the NAL unit.

The access unit delimiter is data indicating the head of an access unit (one picture). The SPS is data including information about encoding of the whole sequence, for example, an encoding mode of the whole sequence, a level or a profile. The PPS is data including information indicating an encoding mode of the whole picture, and the SEI is data including additional information which is not essential for decoding of a moving image.

An IDR (Instantaneous Decoding Refresh) picture and a Non-IDR picture are the video data themselves compressed and encoded, respectively. Each of the pictures respectively corresponds to one video frame. The IDR picture is a picture encoded by information about only the picture without referring to another image. The Non-IDR picture indicates a picture which is not IDR and is a picture using information about another picture (called a reference picture) in the case of encoding the picture. Each of the access units includes one IDR picture or one Non-IDR picture. Plural access units including the Non-IDR picture are sent subsequently to access units including the IDR picture. The slice layer indicates the IDR picture or the Non-IDR picture.

In operation of H.264 in mobile broadcasting, an access unit has two kinds of structure as shown below.

(1) access unit delimiter + SPS + PPS (+ SEI) + IDR picture

(2) access unit delimiter + (+ PPS) + (+ SEI) + non-IDR picture

In the above, the description inside the parentheses, such as (+ SEI), (+ PPS), and (+ SEI), indicates information which may or may not exist.

An operation of the H.264 decoder 210 will be described below.

The H.264 decoder 210 separates the NAL unit described above when a stream is inputted (S102). As described above, a video frame data body is stored in the slice layer and parameters are stored in the other units. The H.264 decoder 210 decodes only the parameters with respect to the NAL units other than the slice layer (S103 to S106).

For the slice layer, processing somewhat differs between the cases of an IDR picture and a Non-IDR picture.

First, processing of the H.264 decoder 210 in the case where a slice layer is an IDR picture will be described. In the case of the IDR picture, a predictive mode is first decoded (S107) and a parameter described in a slice header is decoded (S108). Next, processing of a macro block is performed. The macro block indicates a block structure made of 16 pixels long by 16 pixels wide and in H.264, compression encoding is performed in a macro block unit.

An image size of mobile broadcasting is a size of 320 pixels long by 240 pixels wide called QVGA, and results in 300 macro blocks in the case of being converted into the number of macro blocks. In processing of one macro block, a coefficient of a frequency region of 16 pixels by 16 pixels is decoded (S109) and inverse quantization and inverse DCT processing are performed (S110) and a processing result is added to a first sample value calculated from intra-screen prediction and a second sample value is obtained (S111, S112). This is performed by the number of macro blocks and a sample value by one picture is obtained. After the sample value by one picture is obtained, deblocking processing for eliminating block noise is performed (S113) and the final output image data is obtained.

Next, processing of the H.264 decoder 210 in the case where a slice layer is a Non-IDR picture will be described. In the case of the Non-IDR picture, a predictive mode is first decoded (S114) and a parameter of a slice header is decoded (S115).

Next, the decoder 210 performs processing of a macro block. In processing of one macro block, motion vector prediction and calculation associated therewith are performed (S116) and a coefficient of a frequency region is decoded (S117) and inverse quantization and inverse DCT processing are performed (S118) and a processing result is added to a first sample value calculated from inter-screen prediction and a second sample value is obtained (S119, S120). This is performed by the number of macro blocks (300 blocks) and a sample value by one picture is obtained.

The motion vector prediction is prediction of a motion direction and the amount of motion of each of the pixels displayed inside a macro block. After the sample value by one picture is obtained, deblocking processing is performed and the final output image data is obtained (S113). The above description is a basic action of the H.264 decoder 210.

Next, error detection of a syntax level by the ES error detection unit 202 according to the invention will be described.

In error detection of a syntax level, processing similar to H.264 decoding processing is performed but the processing shown by dark blocks of Fig. 6 among the H.264 decoding processing becomes unnecessary. That is, the inverse quantization and inverse DCT processing, calculation of the intra-screen prediction sample value, calculation of the sample value and a deblocking filter in decoding of the IDR picture become unnecessary. Also, the motion vector prediction and calculation, the inverse quantization and inverse DCT processing, calculation of the inter-screen prediction sample value, calculation of the sample value and the deblocking processing in decoding of the Non-IDR picture become unnecessary.

It is said that a load of the decoding processing of H.264 is higher (throughput is larger) as compared with other decoding processing and particularly, loads of the deblocking processing of step S113 and the motion vector prediction of step S116 are high. A load of only the decoding processing (processing steps shown by white blocks in Fig. 6) of syntax is not too high. As a result of comparing all the decoding processing with decoding of only the syntax, a processing load of the decoding of only the syntax was about one-tenth that of all the decoding processing.

In the case of decoding to the syntax, an error can easily be detected almost surely. In H.264, variable-length encoding of parameters of other NAL units as well as the slice layer is performed. For a variable-length code, usable codes are limited unlike a fixed-length code, so that when an error occurs in a stream, its error can be detected easily. For example, in the case where (1, 1, 1) of a binary is a code which is impossible in the variable-length code, it can be decided that it is a syntax error when such a code occurs. Also, since there are many cases where a value of a parameter decoded has a limit, it can be decided that it is a syntax error when the parameter value is a value beyond a predetermined range (beyond the limit). In the present application, the syntax error includes an abnormal value of the parameter decoded and a data abnormal value in an encoded stream.

Therefore, almost perfect error detection can be performed by detecting an error using a decoder of a syntax level, that is, the ES error detection unit 202 thus.

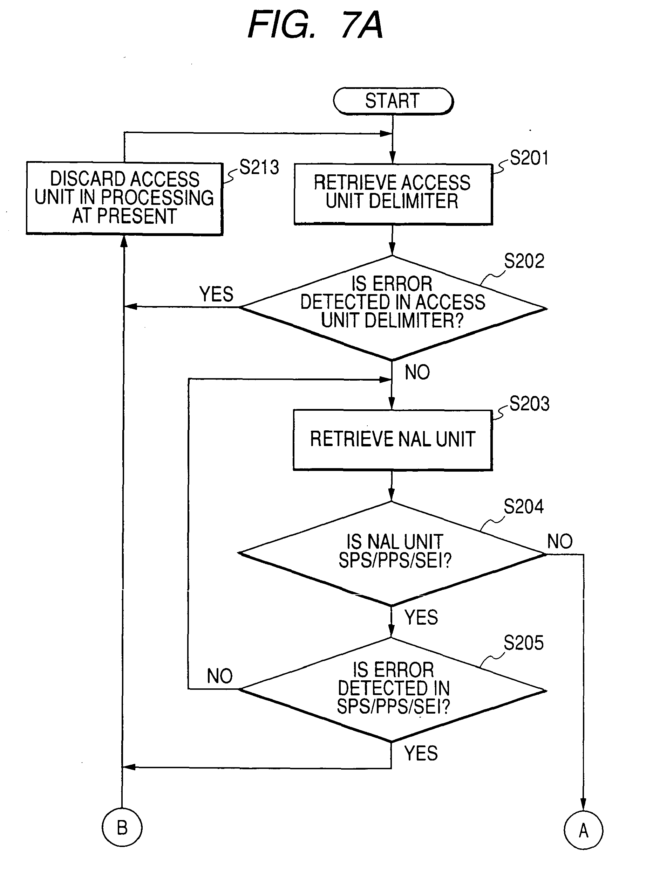

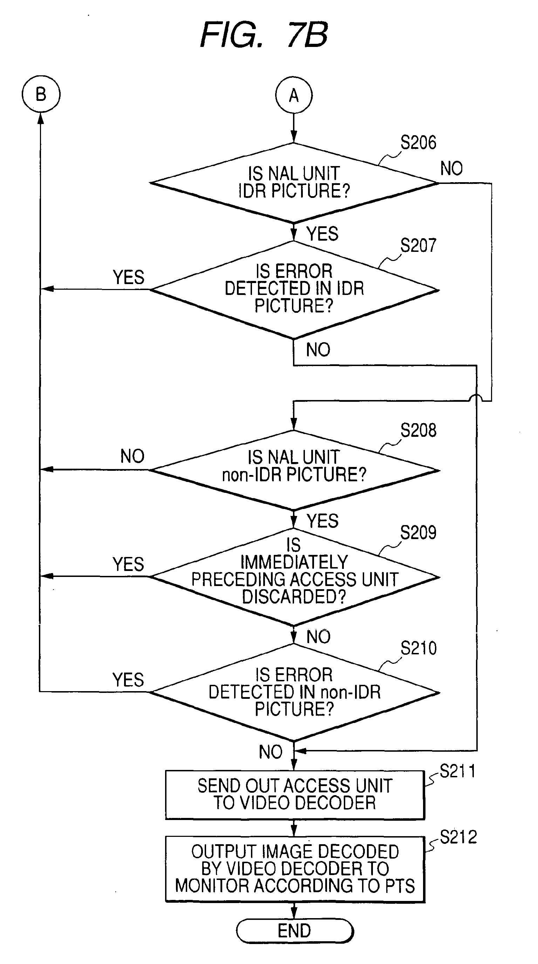

Next, processing for detecting an error and discarding a stream including this error will be described with reference to a flowchart of Figs. 7A and 7B. This processing is executed by the ES error detection unit 202 mainly.

First, an access unit delimiter which is the first NAL unit in an access unit is retrieved (S201). When the access unit delimiter is detected and an error is detected in this access unit delimiter (Yes of S202), the access unit in processing at present is discarded (S213) and the next access delimiter is retrieved (S201). When an error is not detected in the detected access unit delimiter (No of S202), the next NAL unit is retrieved (S203).

It is decided whether the NAL unit detected next to the access unit delimiter is SPS or PPS or SEI (S204), and when it is any of the NAL units, an error check is made (S205). This error check decides whether or not a value of a parameter decoded is a value within a range set in this parameter, and when the value is the value beyond the range, it decides that it is an error. When an error is detected, the access unit in processing at present is discarded (S213) and the next access delimiter is retrieved (S201). When an error is not detected in the detected NAL unit (No of S205), retrieval of the NAL unit is continued (S203).

When the detected NAL unit is not any of the SPS, PPS and SEI in step S204 (No), it is decided whether or not its NAL unit is an IDR picture (S206). When it is the IDR picture, an error check is made (S207) and when the error is detected, the access unit in processing at present is discarded (S213) and the next access delimiter is retrieved (S201). In error detection of this case, a data abnormal value in an encoded stream is detected.

When the error is not detected (No of S207), the access unit is sent out to the video decoder 210 (S211). The access unit sent out is decoded by the video decoder 210 and is outputted to a monitor according to PTS time (S212).

When the detected NAL unit is not the IDR picture (No of S206) and is a non-IDR picture (Yes of S208), it is decided whether or not the immediately preceding access unit is discarded (S209). When the immediately preceding access unit is discarded (Yes of S209), the access unit in processing at present is discarded (S213) and the next access delimiter is retrieved (S201).

Since the non-IDR picture is decoded with reference to the previous picture, the picture cannot be decoded when the previous picture is discarded. Therefore, when an error is present in the non-IDR picture, subsequent non-IDR pictures cannot be decoded. In this case, all the access units ranging from the non-IDR picture in which an error is detected to the immediately preceding non-IDR picture of the next IDR picture are discarded. Incidentally, also when an error is detected in the IDR picture as shown in step S207, all the access units ranging from the IDR picture to the immediately preceding non-IDR picture of the next IDR picture are discarded.

When the immediately preceding access unit is not discarded (No of S209), error detection for a non-IDR picture is performed (S210). In the error detection of this case, a data abnormal value in an encoded stream is detected in a manner similar to that of the IDR picture. When the error is detected (Yes of S210), the access unit in processing at present is discarded (S213) and the next access delimiter is retrieved (S201). In the error detection of this non-IDR picture, an error can also be detected in the case of decoding of a predictive mode. When the error is not detected (No of S210), the access unit is sent out to the video decoder 210 (S211).

As a result of this, the video decoder 210 decodes only the access unit without including an error, and outputs a sharp image with no error to a monitor at the time described in PTS (S212).

In the conventional art, an error was detected to some extent at a previous stage of a decoder, but an error of a syntax level was not found until decoding was performed by the decoder, so that there was a problem that it was difficult to perform error processing and synchronous processing of video/sound. In the present embodiment, an error of a syntax level capable of being first detected by the conventional decoder can be detected previously, so that only an ES without including the error can be inputted to the decoder. As a result of this, an error incapable of recovery in the decoder due to an error stream does not occur. Also, an error detection ratio is very high as compared with that of a conventional method.

Also, in the conventional case, even when an error is present in an encoded stream, useless processing for decoding this encoded stream by a decoder was performed. However, in the present embodiment, an error stream is not decoded by a decoder, so that there is an effect of reducing a processing load of the decoder in a situation of frequent occurrence of errors in which a radio state is bad. Particularly in the case of using an H.264 method in mobile environment, there is a feature in which the processing itself of H.264 is very heavy and a radio state is not necessarily stable, so that power consumption can be reduced by reduction in a processing load at the time of occurrence of such an error.

The above description is the embodiment of the invention and an apparatus and a method of the invention are not limited and various modified examples can be implemented easily. Also, apparatus or methods constructed by properly combining components, functions, features or method steps in each of the embodiments are included in the invention.

As described above with reference to the embodiment, there is provided a system that detects an error of a syntax level at a previous stage of input of a video decoder and inputs only a stream in which an error is absent to the video decoder and prevents an abnormal action of the decoder due to a stream error.

Since an error of a syntax level is detected at a previous stage of input of a video decoder, only a stream in which an error is absent is inputted to the video decoder and an abnormal action of the decoder because of a stream error can be prevented.

It is to be understood that the invention is not limited to the specific embodiment described above and that the invention can be embodied with the components modified without departing from the spirit and scope of the invention. The invention can be embodied in various forms according to appropriate combinations of the components disclosed in the embodiment described above. For example, some components may be deleted from all components shown in the embodiment. Further, the components in different embodiments may be used appropriately in combination.

## Claims

1. An encoded stream reproducing apparatus comprising:
a separation unit that receives a transport stream and separates a video packetized elementary stream and a sound packetized elementary stream from the transport stream;
an extraction unit that extracts an elementary stream as an encoded stream from the video packetized elementary stream separated by the separation unit;
an error detection unit that detects a syntax error included in the elementary stream extracted by the extraction unit, discards the elementary stream that includes the syntax error, and outputs the elementary stream that no syntax error is detected; and
a decoder that decodes the elementary stream output from the error detection unit into a video signal and outputs the decoded video signal.

2. The encoded stream reproducing apparatus according to claim 1, wherein the error detection unit decodes a parameter regarding encoding of the elementary stream, detects an error included in the parameter, and discards the elementary stream including the error in the parameter.

3. The encoded stream reproducing apparatus according to claim 1, wherein the encoded stream is an H.264 encoded stream and includes an IDR picture and a non-IDR picture, and
wherein the error detection unit detects a syntax error included in the IDR picture and the non-IDR picture and discards the elementary stream including the syntax error.

4. The encoded stream reproducing apparatus according to claim 1, wherein the encoded stream is an H.264 encoded stream and includes a plurality of access units, and
wherein the error detection unit detects a syntax error included in the access units, and discards the access units including the syntax error.

5. The encoded stream reproducing apparatus according to claim 1, wherein the encoded stream is an H.264 encoded stream and includes a plurality of encoded access units, the encoded access units being one of a first access unit including an IDR picture and a second access unit including a non-IDR picture,
wherein the error detection unit detects a syntax error included in the first or second access unit, and
wherein the error detection unit discards the access units ranging from the access unit including the syntax error to the immediately preceding second access unit of the next first access unit.

6. An encoded stream reproducing apparatus comprising:
a receiving unit that receives a transport stream adapted for a mobile device including an H.264 encoded stream including an access unit respectively including one or more NAL units;
a separation unit that separates a video packetized elementary stream and a sound packetized elementary stream from the transport stream received by the receiving unit;
an extraction unit that extracts the encoded stream from the video packetized elementary stream separated by the separation unit;
an error detection unit that detects a syntax error in the NAL unit included in the encoded stream extracted by the extraction unit, discards the NAL unit including the syntax error, and outputs an access unit consisting of the NAL unit without the syntax error; and
a decoder that decodes the access unit output from the error detection unit, and outputs the decoded video signal.

7. The encoded stream reproducing apparatus according to claim 6, wherein the error detection unit decodes the NAL unit having a parameter regarding encoding of the encoded stream,
wherein the error detection unit detects an error in the parameter having parameter value beyond a predetermined range, and
wherein the error detection unit discards the access unit including the NAL unit including the error and outputs the access unit having the NAL unit without the error.

8. An encoded stream reproducing method comprising:
receiving a transport stream;
separating a video packetized elementary stream and a sound packetized elementary stream from the received transport stream;
extracting an elementary stream as an encoded stream from the separated video packetized elementary stream;
detecting a syntax error in the extracted elementary stream;
discarding the elementary stream including the syntax error;
outputting the elementary stream without the syntax error; and
decoding the output elementary stream without the syntax error; and
outputting the decoded elementary stream as a video signal.

9. The encoded stream reproducing method according to claim 8, further comprising:
decoding a parameter regarding encoding of the extracted elementary stream;
detecting an error of in the decoded parameter; and
discarding the elementary stream including the error in the parameter.
